Europäisches Patentamt

**European Patent Office**

**Office européen des brevets**

(19)

(11) Publication number: **0 077 150**
**B1**

# (12) EUROPEAN PATENT SPECIFICATION

(45) Date of publication of patent specification: **26.02.86**

(51) Int. Cl.⁴: **A 61 C 5/06,** B 65 D 81/32

(21) Application number: **82305201.4**

(22) Date of filing: **30.09.82**

(54) **Dental amalgam capsules.**

(30) Priority: **02.10.81 US 307992**

(43) Date of publication of application:
**20.04.83 Bulletin 83/16**

(45) Publication of the grant of the patent:
**26.02.86 Bulletin 86/09**

(84) Designated Contracting States:
**AT BE CH DE FR GB IT LI NL SE**

(56) References cited:
**FR-A-2 470 739**
**SE-B- 417 077**
**US-A-2 647 638**
**US-A-2 687 130**
**US-A-3 792 530**

(73) Proprietor: **SYBRON CORPORATION**
**1100 Midtown Tower**
**Rochester, NY 14604 (US)**

(72) Inventor: **Probst, Robert L.**
**1901 Mershon Drive**
**An Arbor Michigan (US)**
Inventor: **Groves, William A.**
**3201 Daleview Drive**
**Ann Arbor Michigan (US)**

(74) Representative: **Oliver, Roy Edward et al**
**POLLAK MERCER & TENCH High Holborn House**
**52-54 High Holborn**
**London WC1V 6RY (GB)**

Courier Press, Leamington Spa, England.

## Description

The invention relates to dentistry and is concerned, in particular, with improvements in dental amalgam capsules, preferably of the two-piece two-chamber self-activating type, for storing dental amalgam components in unmixed condition, until the dental amalgam is required for use, the improved capsule also enabling the components to be mixed and triturated together. Dental amalgam capsules which meet these desirable conditions contain the requisite components as supplied to the dentist and can be used to prepare a quantity of amalgam without any other component having to be added to the capsule.

Two-piece two-chamber capsules for containing amalgam components, which can be charged with these components in one step, are disclosed in US—A—3,917,062 and 4,142,629. Two-chamber capsules requiring the use of pestles and/or partitions between the chambers, but not having one-step charging, are disclosed in US—A—3,796,303, 4,182,447 and 4,185,740; the two last-mentioned publications also describe self-activation of the capsules disclosed, caused by including a pestle or pellet un one of the capsule chambers which, in use, breaks or moves a partition between the chambers so that the amalgam components can come together and mix to form the amalgam. Other forms of two-chamber capsules having movable or rupturable partitions are disclosed in AU—B—56748/80 and SE—A—7904822—9. FR—A—2470739 discloses a two-chamber capsule made of two interfitting parts which define the separate chambers when fully fitted together; this capsule is not self-activating and, instead, operation to mix the components and form the amalgam necessitates partially opening the capsule, which causes the chamber containing the mercury to open into the other container. None of these prior art capsules combines two-piece construction with one-step charging and self-activation, and it is the overall purpose of this invention to provide a capsule which has this advantageous combination of features.

According to one aspect of this invention, a capsule is provided, comprising a first section and a second section, which fit together to define a first chamber and a separate second chamber within the capsule, the first chamber serving to receive a quantity of an alloy component and the second chamber serving to receive a quantity of mercury, which when transferred to the first chamber and mixed with the alloy component, forms a dental amalgam, characterized in that a normally-closed valve is provided between the first chamber and the second chamber and is arranged, when mercury is present in the second chamber to open under the influence of inertial force exerted of the valve by the mercury and caused by shaking the capsule, whereby the mercury can pass from the second chamber into the first chamber and whereby, when the alloy component is present in the first chamber, the dental amalgam is formed in the first chamber.

According to another aspect of this invention, a capsule is provided, containing a first chamber and a second chamber respectively containing predetermined quantities of a metal powder and mercury which mix to form a dental amalgam, characterized in that the mercury is prevented from passing from the second chamber into the first chamber by a one-way valve comprising parts which operate solely by flexion and that operation of the valve is caused solely by impact of the mercury upon the valve caused by shaking the capsule.

This invention provides a self-activating two-chamber capsule containing the components required for forming a dental amalgam. The structure requires no pestle and no movable, slidable or frangible partitions. Communication between the chambers is controlled by a normally-closed valve. When the capsule is shaken in a manner normally used for trituration, the inertia of the mercury opens the valve, so that the mercury can pass into the other chamber, containing the metal powder, and is triturated with it to form the usual amalgam for filling teeth.

In the preferred form this invention provides self-activation and one-step charging in a two-piece two-chamber capsule structure. In particular, the one-way valve comprises a portion of each piece of the capsule structure and both chambers are provided in one of the pieces. The two chambers open separately to the exterior and the other piece of the capsule closes both of these openings, so that the aforesaid valve-forming portions then normally prevent communication between the chambers. With this arrangement, one-step charging is provided, whereby appropriate quantities of metal powder and alloy can be poured simultaneously into their respective chambers via the openings provided, after which the two pieces can be assembled without further manipulation. This is a one-step procedure, because the piece having the openings need only be oriented properly (i.e. with the chamber openings at the highest point) and, after the mercury and metal powder are in place, it is then only necessary to put the other piece in place. In use by the dentist, the capsule can simply be taken from a box or other storage means, placed in an amalgamator and shaken for a predetermined time suitable for reducing the separate components to an amalgam of properties appropriate for filling teeth. Immediately, the shaking begins, the aforesaid valve opens and admits the mercury to the chamber containing the metal powder. At this point, the amalgamating process occurs just as in prior art capsules, with or without a pestle.

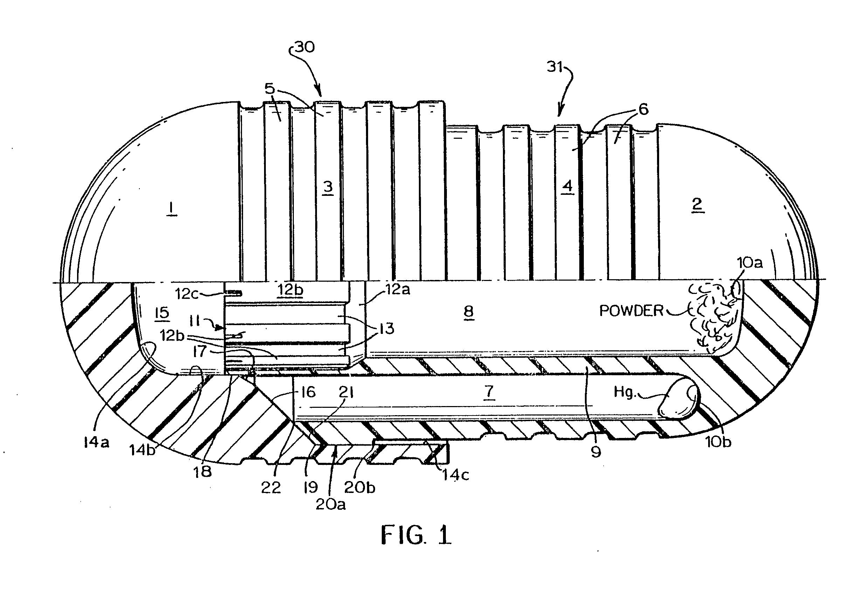

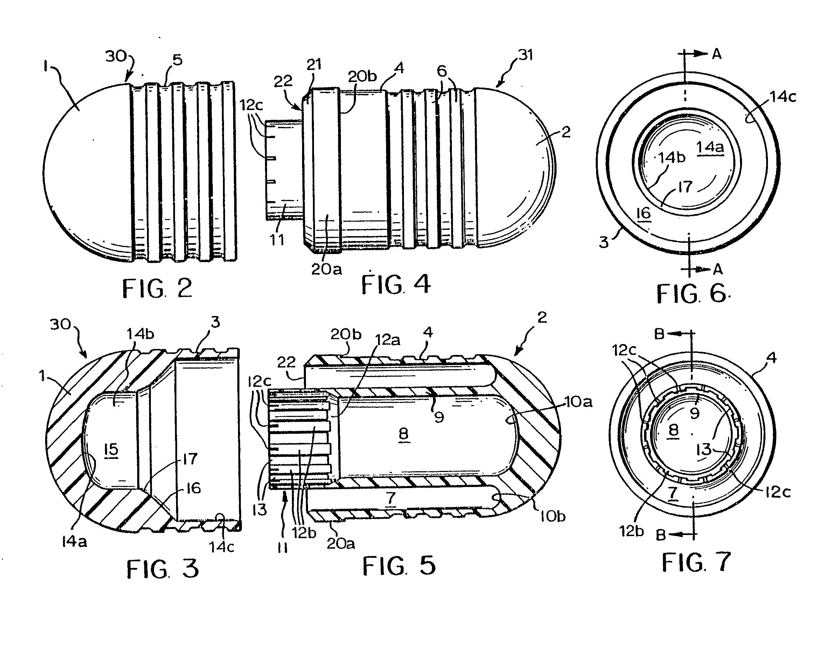

In order that the invention may be fully understood and appreciated, a preferred embodiment is described below by way of example, in conjunction with the accompanying drawings, in which Fig. 1 shows an actual working example on a considerably enlarged scale and Figs. 2 to 7 show components of the same capsule on a scale enlarged to a lesser extent than Fig. 1; in the drawings:

Fig. 1 shows a part-sectional part-elevational view of the preferred form of assembled capsule according to the invention;

Fig. 2 shows an elevational view of one part of the capsule, namely the front section shown at the left-hand side in Fig. 1;

Fig. 3 shows a sectional view of the capsule part of Fig. 2, as seen on the line A—A of Fig. 6;

Fig. 4 shows an elevational view, similar to Fig. 2 of the other part of the capsule, namely the rear section shown at the right-hand side in Fig. 1;

Fig. 5 shows a sectional view of the capsule part of Fig. 4, as seen on the line B—B of Fig. 7;

Fig. 6 shows an end view from the right of the capsule part shown in Figs. 2 and 3;

Fig. 7 shows an end view from the left of the capsule part shown in Figs. 4 and 5.

Referring to Fig. 1, the capsule according to the invention, as best seen in the top half of the Figure, is a generally cylindrical pwo-piece structure consisting of a front section 30 and a rear section 31. Each of these capsule sections consists of a round ended portion integral with a right cylindrical portion. The front section 30 comprises a round-ended, e.g. hemispherical, portion 1 and an integral right cylindrical portion 3 and the rear section 31 comprises a round-ended portion 2 and an integral right cylindrical portion 4. The rear section 31 fits telescopically into the front section 30 by reason of the respective overlapping cylindrical portions 3 and 4. These portions 3 and 4 are ribbed, the ribs running circumferentially, for preference, as indicated at 5 and 6 respectively, in order to facilitate handling of the capsule 30, 31.

The lower half of Fig. 1 shows a cross-section in the vertical plane containing the common longitudinal axes of the portions 3 and 4 and therefore of the longitudinal axis of the whole capsule 30, 31. The rear section 31 has chambers 7 and 8 in it. In the finished capsule 30, 31 a small quantity of mercury is contained in the chamber 7 and a small quantity of metal powder is contained in the chamber 8, the relative proportions of the mercury and the powder being those suitable for making a tooth-filling amalgam when mixed. The chamber 8 is cylindrical and is closed inside the round-ended portion 2 by a rounded base surface 10a. The chamber 7 is annular, being formed between the chamber 8 and the exterior of the capsule section 31. The chambers 7 and 8 are thus concentric circularly right-cylindrical spaces separated by a cylindrical wall member 9, which is an integral part of the one-piece structure comprising the capsule section 31. Similarly to the cylindrical chamber 8, the annular chamber 7 is closed inside the round-ended portion 2 by a rounded base surface 10b.

The other ends of the chambers 7 and 8 from the respective base surfaces 10a and 10b are open and are separated from one another by the free annular end part 11 of the wall member 9. This end part 11 is of reduced thickness compared with the remainder of the wall member 9, a chamfered portion 12a forming a transition between the thinner-walled end part 11 and the inside of the main part of the chamber 8. The end part 11 has a number of axial channels 13 extending along its inside surface from the chamfered portion 12a to the extremity of the end part 11 and a rib 12b is formed between adjacent channels 13 and includes at the end an axial slot or notch 12c.

The front section 30 has a chamber 15 in it, having a rounded base surface 14a, corresponding to the surface 10a of the chamber 8, an inner circular right-cylindrical or first bore portion 14b of lesser internal diameter and a second or outer bore portion 14c of greater internal diameter, the bore portion 14c extending to the open end of the capsule front section 30. The inner and outer bore portions 14b and 14c have their internal surfaces joined by a frusto-conical transition portion 16 which, adjacent the inner bore portion 14b, merges with the latter by way of a chamfered surface 17.

The internal diameter of the outer bore portion 14c is slightly greater than the external diameter of the cylindrical portion 4 of the capsule rear section 31, except adjacent the free rim 22 of the latter. The extremity of the wall part 19 of the cylindrical portion 4 is of a larger diameter, shown at 20a, so as to fit sealingly inside the outer bore portion 14c of the front capsule section 30 when the capsule is assembled. A small shoulder 20b is formed between this sealing portion 20a of larger diameter and the remainder of the portion 4. The end surface 21 of the wall part 19 is of frusto-conical form and matches the conicity of the transition portion 16 between the inner and outer bore portions 14b and 14c. When the front and rear sections 30, 31 of the capsule are fitted together, as shown in Fig. 1, the sealing portion 20a fits within the outer bore portion 14c, the coned end surface 21 of the wall portion 19 extending from the rim 22 to the sealing portion 20a abuts the transition portion 16 and the external extremity of the wall member 9 comprising the ends of the ribs 12b with the notches 12c and the ends of the channels 13 abuts the inner bore portion 14b adjacent the surface 17.

As can be readily seen from Fig. 1, three annular sealing areas are thus produced between the inter-nesting capsule sections 30 and 31. Firstly, an annular seal is formed by the inside surface of the bore portion 14b being in continuous contact with the outer circumferential area of the open end 11 of the wall member 9. The width of this seal is the distance between the inner edge of the chamber surface 17 and the rim 18 of the wall member 9. A second and similar annular seal extends circumferentially about the exterior surface of the thicker wall part 19, the width of the seal area being the distance from the end of the wall part 19 to the shoulder 20b. In addition, a third sealing area is defined by the frusto-conical end surface 21 of the wall member 19 as it makes abutting contact with the surface of the correspondingly shaped transition portion 16, the width of this seal area being the distance between the end of the sealing portion 20a and the rim 22.

The capsule front and rear sections, such as shown at 30 and 31, are preferably manufactured by moulding from suitable plastics materials. Charging and assembly consist of supporting each of the capsule rear sections 31 on its end portion 2 with its axis upright, whereupon suitable quantities of mercury and metal powder can be dropped, separately but simultaneously, into the respective chambers 7 and 8. One of the capsule front sections 30 is then positioned with its end portion 1 uppermost and is fitted over the open end of the rear section 31, in order to seal the respective amalgam components into their separate chambers 7 and 8. The three seals described above are formed as the capsule sections are fitted together and prevent the mercury from leaving the chamber 7 and the metal powder from leaving the chamber 8, so that they remain separate. The closed capsule can then be packaged for storage and despatch. No further manipulation of the two sections of the capsule 30, 31 is needed, until the components have been mixed so as to become an amalgam. The capsule is then opened by separating the two sections in order to remove the amalgam for dental use. The capsule is preferably positioned upright for opening, most preferably with the rear section 31 uppermost, so that removal of it leaves the prepared amalgam in the chamber 15 in the front section 30, from which it can be readily removed.

As the free end 11 of the wall member 9 is made of relatively thin material compared with the other wall parts, such as the rest of the wall member 9, and because of the notches 12c and the channels 13, this open end from the chamfered surface 12a to the rim 18 is flexible, as compared to the main portion 1 of the wall member 9. Accordingly, when the filled capsule is put into an amalgamator, so as to be shaken in a direction substantially along the main axis of the cylindrical portions 3 and 4, the initially separate contents of the capsule are flung from one end to the other of the chambers 7 and 8. Consequently, the inertial force of the mercury as it strikes the end of the annular chamber 7 adjacent the transition portion 16 and the adjacent surfaces of the end 11 (to the right of the surface 17 as seen in Fig. 1), causes flexion of the relatively thin portions forming the end region 11. These portions flex toward the longitudinal axis of the capsule portions 3 and 4. This flexing provides communication between the chamber 7 and the chamber 8, as parts of the outer surface of the end 11 are forced away from the surface of the inner bore portion 14b of the chamber 15. In reality, the flexing occurs substantially instantaneously. As soon as the mercury opens the seal between the end 11 and the bore portion 14b, so producing a passageway (not shown, as it is of indeterminate form), it passes through into the chamber 15. Due to the inherent elasticity of the material, any part of the end 11 which has been flexed returns to make sealing contact with the adjacent surface of the bore portion 14b, before the displacement which flung the mercury against the transition portion 16 and the flexible end 11 is followed by the next displacement of the capsule which could otherwise cause the mercury to be flung toward the end 11. The chambered surface 17 adjacent the transition portion 16 facilitates passage of the mercury.

In practice, the detailed construction of the thin part of the wall member 9, between the chamfered portion 12a and the rim 18, causes it to operate as a one-way valve between the annular mercury chamber 7 and the central mixing compartment of the capsule comprising the metal powder chamber 8 and the front section chamber 15. The seal area between the chamfer surface 17 and the rim 18 is thus a passageway controlled by a normally-closed valve, the actuator of which is in effect the transition portion 16 and the end 11, since the former directs the mercury towards the end 11. The impact of the mercury on the place or places struck by it produces a valve-opening force which flexes the end 11 inwardly against a restoring force provided by the natural elasticity of the end 11, as determined by its dimensions, material and form, including the notches 12c and the channels 13.

Once it has entered the part of the chamber 15 within the inner bore portion 14b, which forms with the chamber 8 the normally-closed mixing compartment, the mercury is confined to this compartment, because the end 11 has no part which could cause it to flex inwards in response to impact of the mercury in the chamber 8. Moreover, once it is out of the relatively narrow confines of the chamber 7, the mercury breaks up into many small globules and, along with the metal powder, forms a sort of dispersion, the kinetic energy of which is mainly absorbed by the ends of the compartment formed by the chambers 8 and 15, which are provided for this purpose with the rather robust wall portions between the surfaces 14a, 14b and 10a and the exterior surfaces of the round-ended portions 1 and 2.

The operation of the valve is substantially instantaneous for all practical purposes and occurs practically immediately upon the beginning of shaking. In other words, the time necessary for proper amalgamation does not have to take into account the very short period which elapses between setting the capsule in motion and entry of the mercury into the chamber 15.

The capsule according to this invention is normally supplied ready charged with mercury and metal powder, so that in order to use the capsule it is merely necessary to make it out of a box or other storage arrangement, put it into any desired form of amalgamator machine and operate the machine so that it shakes the capsule for a time dependent upon the composition of the metal powder (usually one of several alloys), the user's preference as to amalgam texture and/or the number of "spills" in the capsule.

The concentric form of the chambers 7 and 8 in the rear section 31 provides an axial symmetry suitable for forming both of the capsule sections by a conventional moulding process. However, the chambers 7 and 8 could be arranged differently, for instance side by side, and in any event the chamber 7 need not extend all the way around the wall member 9. As is known, the optimum volume for the capsule depends upon the quantities of amalgam proposed to be used and its optimum length depends upon the kinetics of the amalgamator. The volume of the chamber 7, as shown, is rather more generous than is necessary just to contain the mercury. However, the length shown has been found suitable to develop sufficient inertial force by movement of the mercury to actuate the valve.

Because the mercury tends to collect at the lowest point in the chamber 7, when the capsule is used in an amalgamator having a horizontally-directed shaking motion, corresponding portions of the end 11 of the transition portion 16 are acted on substantially by a unitary body of mercury. The same result can be achieved if the chamber 7 is a simple tubular bore of the length shown in Figure 1, located alongside the chamber 8 and having a diameter of approximately the radial distance between the wall member 9 and the exterior of the portion 4. If the mercury is concentrated into a unitary body, it flexes only a minor portion of the end 11. Again, the moulding process preferred makes it convenient to form the end 11 so as to be capable of flexing at any place around its circumference.

The material of the capsule can be polyethylene, a "hard" form being desirable for the front section 30 and a "medium hard" form being desirable for the rear section 31. Using sufficiently dense material reduces the chance of contamination between the chambers. Tolerances for the fit between the two capsule sections 30 and 31 must be such as to prevent leakage of mercury from the chamber 7. A preferred set of dimensions for the capsule includes a longest dimension of 3.35 cm, for the assembled capsule as shown to scale in Figure 1.

The capsule of the invention provides to the utmost the desirable advantages of economy, ease and simplicity of manufacture, charging and use, in contrast to capsules already known or in use.

## Claims

1. A capsule comprising a first section (30) and a second section (31), which fit together to define a first chamber (8) and a separate second chamber (7) within the capsule, the first chamber (8) serving to receive a quantity of an alloy component and the second chamber (7) serving to receive a quantity of mercury, which when transferred to the first chamber (8) and mixed with the alloy component, forms a dental amalgam, characterized in that a normally-closed valve (11—13, 18) is provided between the first chamber (8) and the second chamber (7) and is arranged, when mercury is present in the second chamber (7), to open under the influence of inertial force exerted on the valve (11—13, 8) by the mercury and caused by shaking the capsule, whereby the mercury can pass from the second chamber (7) into the first chamber (8) and whereby, when the alloy component is present in the first chamber (8), the dental amalgam is formed in the first chamber (8).

2. A capsule according to claim 1, wherein the valve (11—13, 18) comprises flexible means (11) normally located in sealing contact with a surface within the capsule and wherein the inertial force causes the flexible means (11) to bend away from that surface.

3. A capsule according to claim 1 or 2, wherein the first section (30) contains a bore (14b), the second section (31) contains the first chamber (8) and the second chamber (7) and each of the first and second chambers (8, 7) opens separately into the bore (14b) respective portions (11—13, 18) of the first and second sections (30, 31) sealingly interengaging so as to form the valve (11—13, 18) and to seal the second chamber (7) from the bore (14b) and thereby separate the second chamber (7) from the first chamber (8).

4. A capsule according to claim 3, wherein the second chamber (7) is annular and surrounds the first chamber (8) and wherein a portion (11—13) of the second section (30) which interengages with a portion (18) of the first section (31) comprises a common wall (9) which separates the first and second chambers (8, 7).

5. A capsule according to claim 4, wherein the bore (14b) includes a frusto-conical portion (16), which surrounds the second portion (31) comprising the common wall (9), and also a cylindrical portion (4), having the surface (18) which is sealingly engaged by the common wall (9), when the capsule sections (30, 31) are fitted together.

6. A capsule (30, 31) containing a first chamber (8) and a second chamber (7) respectively containing predetermined quantities of a metal powder and mercury which mix to form a dental amalgam, characterized in that the mercury is prevented from passing from the second chamber (7) into the first chamber (8) by a normally-closed one-way valve (11—13, 18) comprising parts (11—13) which operate solely by flexion and that the valve (11—13, 18) is arranged to open solely by impact of the mercury upon such valve parts (11—13) caused by shaking the capsule (30, 31).

## Revendications

1. Capsule se composant d'une première section (30) et d'une seconde section (31) qui définissent, en s'adaptant l'une dans l'autre, une première chambre (8) et une seconde chambre séparée (7) à l'intérieur de la capsule, la première chambre (8) servant à recevoir une certaine quantité d'un composant d'alliage et la seconde chambre (7) servant à recevoir une certaine quantité de mercure qui forme un amalgame dentaire lorsqu'elle est transférée dans la première chambre (8) et mélangée au composant d'alliage, caractérisée en ce qu'une soupape normalement fermée (11—13, 18) est prévue entre la première chambre (8) et la seconde chambre (7) et est agencée de telle manière que quand du mercure est présent dans la seconde chambre (7), elle s'ouvre sous l'influence de la force d'inertie exercée sur la soupape (11—13, 8) par le mercure et produite par secouage de la capsule, ce qui fait que le mercure peut passer de la seconde chambre (7) dans la première chambre (8) et que, de la sorte, lorsque le composant d'alliage est présent dans la première chambre (8), l'amalgame dentaire est formé dans la première chambre (8).

2. Capsule selon la revendication 1, dans laquelle la soupape (11—13, 18) comprend des moyens flexibles (11) qui sont mormalement placés en contact de fermeture étanche avec une surface à l'intérieur de la capsule, la force d'inertie ayant pour effet que ces moyens flexibles (11) s'écartent de cette surface en se courbant.

3. Capsule selon la revendication 1 ou 2, dans laquelle la première section (30) contient une cavité alésée (14b), la seconde section (31) contient la première chambre (8) et la seconde chambre (7) et chacune des première et seconde chambres (8, 7) s'ouvre séparément dans la cavité alésée (14b), des parties respectives (11—13, 18) de la première et de la seconde sections (30, 31) s'emboîtant de manière étanche les unes dans les autres de manière à former la soupape (11—13, 18) et à fermer hermétiquement la seconde chambre (7) par rapport à la cavité alésée (14b) et, de la sorte, séparer la seconde chambre (7) de la première chambre (8).

4. Capsule selon la revendication 3, dans laquelle la seconde chambre (7) est annulaire et entoure la première chambre (8) et dans laquelle une partie (11—13) de la seconde section (31), qui s'adapte dans une partie (18) de la première section (30), comprend une paroi commune (9) qui sépare la première et la seconde chambres (8, 7).

5. Capsule selon la revendication 4, dans laquelle la cavité alésée (14b) comprend une partie tronconique (16) qui entoure la seconde section (31) comprenant la paroi commune (9), ainsi qu'une partie cylindrique (4) présentant la surface (18) qui est en contact étanche avec la paroi commune (9) lorsque les sections de capsule (30, 31) sont adaptées l'une dans l'autre.

6. Capsule (30, 31) contentant une première chambre (8) et une seconde chambre (7) qui contiennent respectivement des quantités prédéterminées d'une poudre de métal et de mercure qui se mélangent pour former un amalgame dentaire, caractérisée en ce que le passage du mercure de la seconde chambre (7) vers la première chambre (8) est empêché par une soupape à sens unique normalement fermée (11—13, 18) faite d'éléments (11—13) qui travaillent uniquement à la flexion et en ce la soupape (11—13, 18) est agencée de manière à s'ouvrir exclusivement sous l'effet du choc du mercure sur ces éléments.

de soupape (11—13), résultant du secouage de la capsule (30, 31).

**Patentansprüche**

1. Mischkapsel, bestehend aus einem ersten Abschnitt (30) und einem zweiten Abschnitt (31), die zusammenpassen und innerhalb der Mischkapsel eine erste Kammer (8) sowie von dieser getrennt eine zweite Kammer (7) bilden, wobei die erste Kammer (8) der Aufnahme einer Menge einer Legierungskomponente und die zweite Kammer (7) der Aufnahme einer Menge an Quecksilber dient, welch letzteres der Herstellung eines zahnärztlichen Amalgams dient, nachdem es in die erste Kammer überführt und mit der Legierungskomponente gemischt worden ist, dadurch gekennzeichnet, daß sich zwischen der ersten Kammer (8) und der zweiten Kammer (7) ein normalerweise geschlossenes Ventil (11 bis 13, 18) befindet, daß das Ventil so angeordnet ist, daß es sich, sobald in der zweiten Kammer (7) Quecksilber vorhanden ist, unter dem Einfluß einer durch das Quecksilber auf das Ventil (11 bis 13, 18) ausgeübten Trägheitskraft, die durch ein Schütteln der Mischkapsel hervorgerufen wird, öffnet, so daß das Quecksilber aus der zweiten Kammer (7) heraus und in die erste Kammer (8) heinein gelangen und in der ersten Kammer (8) das zahnärztliche Amalgam gebildet werden kann, falls in dieser ersten Kammer (8) eine Legierungskomponente enthalten ist.

2. Mischkapsel nach Anspruch 1, dadurch gekennzeichnet, daß das Ventil (11 bis 13, 18) ein biegsames, sich normalerweise in dichtem Kontakt mit einer Fläche innerhalb der Mischkapsel befindliches Mittel (11) umfaßt, wobei dieses biegsame Mittel (11) durch die Trägheitskraft des Quecksilbers von dieser Fläche fortbiegbar ist.

3. Mischkapsel nach Anspruch 1 oder 2, dadurch gekennzeichnet, daß der erste Abschnitt (30) eine Bohrung (14b) aufweist, daß der zweite Abschnitt (31) die erste Kammer (8) sowie die zweite Kammer (7) umfaßt, daß sich beide Kammern (8, 7) voneinander getrennt in Richtung auf die Bohrung (14b) hin öffnen, wobei entsprechende Teile (11 bis 13, 18) des ersten Abschnittes (30) und des zweiten Abschnittes (31) zur Bildung des Ventils (11 bis 13, 18) dichtend aneinanderliegen, so daß die zweite Kammer (7) gegenüber der Bohrung (14b) abgedichtet ist und die zweite Kammer (7) von der ersten Kammer (8) getrennt ist.

4. Mischkapsel nach Anspruch 3, dadurch gekennzeichnet, daß die zweite Kammer (7) ringförmig ausgebildet ist und die erste Kammer (8) umgibt und daß die Teile (11 bis 13) des zweiten Anschnitts (31), die mit dem Teil (18) des ersten Abschnitts (30) zusammenwirken, eine Wandung (9) umfassen, welche die Kammern (8, 7) voneinander trennt.

5. Mischkapsel nach Anspruch 4, dadurch gekennzeichnet, daß die Bohrung (14b) einen kegelstumpfförmigen Abschnitt (16) aufweist, der den zweiten Abschnitt (31) mit der Wandung (9) und einem zylindrischen Abschnitt (4) umgibt, wobei die Fläche (18) des ersten Abschnittes (30) dichtend an der Wandung (9) anliegt, sobald die Abschnitte (30, 31) zusammengesetzt sind.

6. Mischkapsel (30, 31) mit einer ersten Kammer (8) und einer zweiten Kammer (7), die jeweils vorherbestimmte Mengen an Metallpulver und Quecksilber enthalten, durch deren Mischung ein zahnärztliches Amalgam herstellbar ist, dadurch gekennzeichnet, daß zur Verhinderung des Übertritts von Quecksilber aus der zweiten Kammer (7) in die erste Kammer (8) ein normalerweise geschlossenes Einwegeventil (11 bis 13, 18) vorgesehen ist, welches Teile (11 bis 13) aufweist, die alleine durch Biegung betätigt werden und daß das Ventil (11 bis 13, 18) so angeordnet ist, daß es alleine aufgrund eines durch ein Schütteln der Mischkapsel (30, 31) bedingten Stoßes des Quecksilbers auf die Teile (11 bis 13) geöffnet wird.

FIG. 1

FIG. 2

FIG. 4

FIG. 6

FIG. 3

FIG. 5

FIG. 7